# FASCICULE DE BREVET EUROPEEN

(11) **EP 3 943 855 B1**
(45) Date de publication et mention de la délivrance du brevet: **27.12.2023**
(21) Numéro de dépôt: 21170051.3
(22) Date de dépôt: 23.04.2021
(51) Int. Cl.: F28B 1/06, F28D 1/02, F28D 5/00, F24F 1/06, F24F 5/00, F24F 11/36, F25B 49/00

(54) **REFROIDISSEUR OU CONDENSEUR ADIABATIQUE COMPRENANT UN SYSTEME DE CONFINEMENT D'UNE EVENTUELLE FUITE DE FLUIDE**
ADIABATISCHER KÜHLER ODER KONDENSATOR, DER EIN EINSCHLUSSSYSTEM FÜR EIN MÖGLICHES FLÜSSIGKEITSLECK UMFASST
ADIABATIC COOLER OR CONDENSER COMPRISING A SYSTEM FOR CONTAINING A POSSIBLE FLUID LEAK

(30) Priorité: 24.07.2020 FR 2007818
(43) Date de publication de la demande: 26.01.2022
(73) Titulaire: Jacir, 77340 Pontault Combault (FR); Gohl-KTK GmbH, 76448 Durmersheim (DE)
(72) Inventeur: DUHAMEL, Philippe, 77340 Pontault Combault (FR); KORINTH, Christoph, 76448 Durmersheim (DE)
(74) Mandataire: Casalonga

(56) Documents cités:
- EP-A1- 3 045 828
- EP-A2- 0 451 325
- WO-A1-2019/220164
- FR-A1- 3 073 040
- JP-A- 2001 099 447
- US-A- 5 638 695
- US-A1- 2020 072 508

## Description

La présente invention concerne le domaine de la génération de froid, plus particulièrement les circuits de refroidissement d'un fluide, par exemple de l'eau, et les circuits frigorifiques.

Plus particulièrement, la présente invention concerne notamment les refroidisseurs et les aérocondenseurs. Un refroidisseur ou aérocondenseur selon le préambule de la revendication 1 et un procédé correspondent selon le préambule de la revendication 10 sont connu de JP 2001 099447 A et EP 3 045 828 A1.

Un circuit de refroidissement d'un fluide peut comprendre un ou plusieurs échangeurs air/liquide.

Un circuit frigorifique comprend généralement successivement un compresseur, un condenseur, un détendeur et un évaporateur.

Les circuits de refroidissement et les circuits frigorifiques permettent d'évacuer efficacement et économiquement vers un milieu extérieur une chaleur générée par un dispositif, par exemple une installation de climatisation, une chambre froide, ou des procédés industriels.

La présente invention trouve une application privilégiée pour les refroidisseurs et les aérocondenseurs dits « secs » ou « adiabatiques », à dispersion d'eau ou à média.

Le refroidisseur ne diffère de l'aérocondenseur que par le fait que la chaleur évacuée ne sert pas à condenser un gaz en liquide mais à refroidir simplement un fluide.

Les considérations ci-après s'appliquent aussi bien aux aérocondenseurs qu'aux refroidisseurs de fluides.

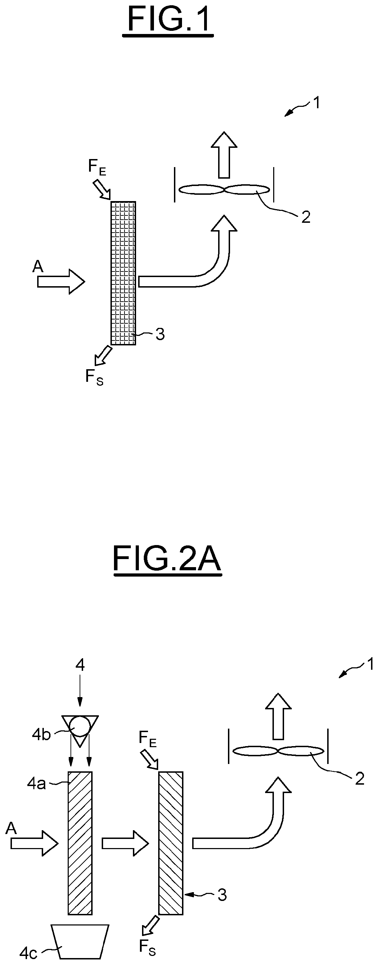

Dans un aérocondenseur 1 sec illustré sur la figure 1, la condensation du fluide frigorigène s'effectue par ventilation d'un flux d'air A mis en mouvement par un ou plusieurs ventilateurs 2 sur une batterie d'échange thermique 3 contenant le fluide frigorigène et configurée pour faire passer le fluide frigorigène d'une forme gazeuse F_{E} à une forme liquide Fs. Le mouvement du fluide d'air A est représenté par des flèches.

L'aérocondenseur adiabatique, illustré sur la figure 2A, se distingue de l'aérocondenseur sec, illustré sur la figure 1, par le fait qu'il comprend un dispositif 4 d'humidification de l'air disposé en amont de la batterie d'échange thermique 3 dans le sens de circulation du flux d'air A. Tel qu'illustré sur la figure 2A, le dispositif 4 d'humidification de l'air comprend un média 4a, un système 4b d'arrosage du média 4a par un fluide, par exemple de l'eau, disposé au-dessus dudit média 4a et configuré pour humidifier ledit média 4a et un système 4c de récupération ou de collecte du fluide d'humidification après avoir traversé le média 4a. En variante, on pourrait prévoir de pulvériser le fluide d'humidification directement dans l'air en amont de la batterie d'échange thermique, en utilisant ou non un média.

La batterie de condensation comprend soit une pluralité de tubes et d'ailettes, soit des micro-canaux. Un fluide frigorigène circule dans les tubes de la batterie de condensation. Les tubes de celle-ci sont reliés à un collecteur d'entrée du fluide frigorigène et à un collecteur de sortie du fluide frigorigène. Dans le cas d'un échangeur de chaleur à tubes et ailettes, les tubes de la batterie de condensation sont reliés entre eux, suivant le nombre de passes, par des coudes à 180°.

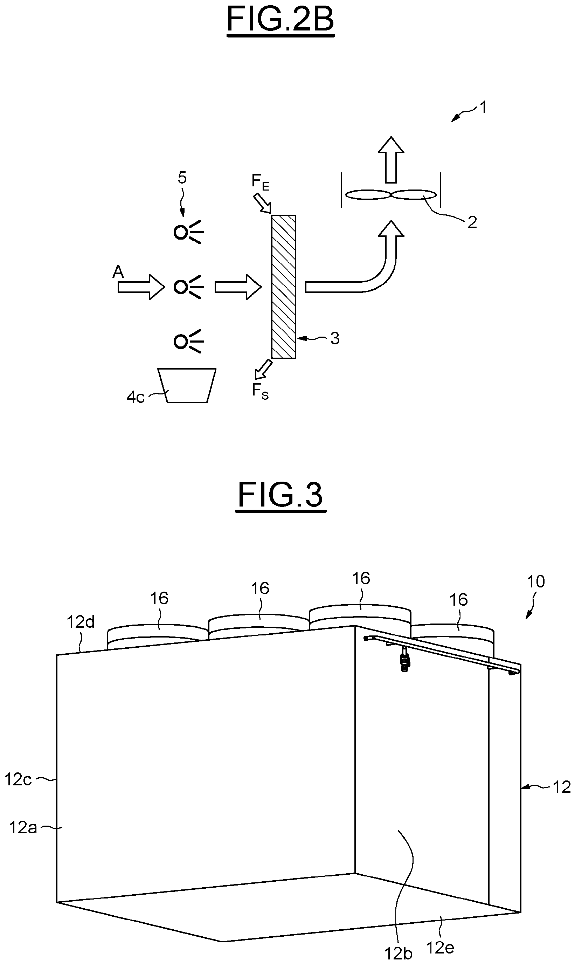

L'exemple illustré sur la figure 2B diffère du mode de réalisation de la figure 1A uniquement par le fait que le dispositif d'humidification de l'air comprend un système 5 de pulvérisation d'un fluide par des buses de pulvérisation. Le système 5 de pulvérisation est monté en amont de la batterie 3 d'échange thermique dans le sens de circulation du flux d'air A.

Toutefois, dans de tels refroidisseurs/condenseurs adiabatiques ou secs, les connections des tubes aux collecteurs ou entre eux par l'intermédiaire de coudes à 180° s'effectuent par soudage, ce qui augmente le risque de fuite de fluide.

Le fluide circulant dans la batterie d'échange thermique est un fluide à refroidir dans le cas d'un refroidisseur ou un fluide à condenser dans le cas d'un condenseur. Ce fluide peut être, par exemple, un fluide frigorigène, de l'eau, du glycol ou un mélange d'eau et de glycol ou tout autre fluide adapté pour être condensé ou refroidi.

Le fluide frigorigène est très souvent nocif pour l'environnement, notamment vis-à-vis de la couche d'ozone et de l'effet de serre et/ou toxique. De nos jours, le fluide frigorigène privilégié afin de réduire son impact sur l'effet de serre et la couche d'ozone est l'ammoniac (NH3). Toutefois, l'ammoniac est particulièrement toxique et inflammable.

Le glycol ou le mélange d'eau et de glycol est également particulièrement nocif pour l'environnement et ne peut pas être rejeté directement dans l'environnement extérieur.

Il est connu de disposer d'un bac de récupération des fuites potentielles du fluide frigorigène sous les refroidisseurs/condenseurs.

Toutefois, un tel bac de récupération des fuites récupère non seulement les éventuelles fuites de fluide circulant dans les batteries, mais également les eaux pluviales ainsi que les particules de biomasse.

De plus, le bac de récupération des fuites de fluide n'est pas étanche aux rayons ultraviolets ce qui favorise la génération de bactéries dans le fluide collecté. Il est ainsi nécessaire de nettoyer régulièrement le bac de récupération. Toutefois, le nettoyage du bac de récupération s'avère compliqué dans la mesure où les pieds du refroidisseur/condenseur sont généralement posés dans le bac de récupération. En cas de fuite, le fluide récupéré est donc souillé par de la biomasse et des bactéries ce qui complique le retraitement dudit fluide.

Il existe un besoin d'éviter toute fuite du fluide circulant dans l'échangeur thermique dans les condenseurs et les refroidisseurs dits « secs » ou « adiabatiques » vers l'environnement extérieur et, le cas échéant de maîtriser une éventuelle fuite du fluide circulant dans l'échangeur thermique.

La présente invention a donc pour but de palier les inconvénients ci-dessus et d'améliorer les refroidisseurs/condenseurs dits « secs » ou « adiabatiques » à dispersion d'eau ou à média afin de maîtriser les éventuelles fuites de fluide circulant dans l'échangeur thermique, notamment au niveau des batteries d'échange thermique.

L'invention a pour objet un refroidisseur ou condenseur, sec ou adiabatique, selon la revendication 1, comprenant une enveloppe délimitée par des parois latérales et un fond, et au moins un échangeur de chaleur traversé par un flux d'air et dans lequel est destiné à circuler un fluide à refroidir ou à condenser, par exemple un fluide à refroidir ou à condenser, tel que par exemple, un fluide frigorigène, de l'eau, du glycol, un mélange d'eau et de glycol ou tout autre fluide adapté pour être condensé ou refroidi. Ledit échangeur de chaleur est monté dans l'enveloppe, le refroidisseur ou condenseur comprenant au moins un capteur de détection d'une fuite de fluide circulant dans l'échangeur de chaleur.

Le refroidisseur ou condenseur comprend un système de confinement d'une fuite de fluide configuré pour collecter un fluide recueilli dans le fond de l'enveloppe et contenant les fuites du fluide circulant dans l'échangeur thermique et lorsqu'une fuite de fluide est détectée par le capteur de détection.

Ainsi, le refroidisseur ou condenseur comprend un système indépendant capable de collecter uniquement les fuites du fluide circulant dans l'échangeur thermique automatiquement lorsqu'une fuite de fluide est détectée.

Les termes « amont » et « aval » sont pris en considération dans le sens de circulation du flux d'air dans le refroidisseur ou condenseur.

Avantageusement, l'enveloppe est étanche aux particules de biomasse extérieures.

Selon l'invention, le système de confinement d'une fuite de fluide comprend :
- un bac de récupération intermédiaire relié d'une part de manière fluidique au fond de l'enveloppe et relié d'autre part à une première vanne et à une deuxième vanne montée en parallèle de la première vanne, et
- un bac de confinement des fuites de fluide monté sous le fond de l'enveloppe.

La première vanne est reliée à l'extérieur du refroidisseur ou condenseur, c'est-à-dire que la première vanne se trouve sur une conduite reliant le bac de récupération intermédiaire à l'extérieur du refroidisseur ou condenseur.

La deuxième vanne est reliée au bac de confinement, c'est-à-dire qu'elle se trouve sur une conduite reliant le bac de récupération intermédiaire au bac de confinement.

Par exemple, le bac de confinement des fuites de fluide monté sous le fond de l'enveloppe de manière à épouser le contour de ladite enveloppe.

Avantageusement, le refroidisseur ou condenseur comprend une unité électronique de commande configurée pour commander l'ouverture de la deuxième vanne lorsqu'une fuite de fluide circulant dans l'échangeur thermique est détectée par le capteur de détection.

L'unité électronique de commande configurée est, par exemple, configurée pour commander l'ouverture de la première vanne lorsqu'aucune fuite de fluide n'est détectée par le capteur de détection.

Le capteur de détection peut être situé sur la conduite reliant le bac de récupération intermédiaire à la première vanne. En variante, le capteur de détection peut être situé dans le bac de récupération intermédiaire ou à un autre endroit du refroidisseur ou condenseur. Par exemple, on pourrait utiliser un organe de mesure du PH pour détecter la présence d'une fuite.

Par exemple, le bac de confinement comprend quatre parois latérales et un plancher ou paroi inférieure formant un fond.

Le bac de confinement peut, par exemple, être inséré sous l'enveloppe par translation dans des rainures de guidage pratiquées dans l'enveloppe.

L'insertion du bac de confinement par coulissement sous l'enveloppe permet de récupérer aisément le bac de confinement en vue du confinement des fuites de fluide.

En variante, on pourrait prévoir de l'enveloppe soit posée sur le bac de confinement et fixée à celui-ci.

Avantageusement, la première et la deuxième vanne sont commandées par une unité de commande électronique.

Selon un mode de réalisation, le refroidisseur ou condenseur comprend un système de collecte du fluide recueilli dans le fond de l'enveloppe comportant une pluralité de conduits de récupération montés sous le plancher de l'enveloppe et comprenant chacun une extrémité libre s'étendant dans un orifice débouchant pratiqué dans le fond de l'enveloppe, le système de collecte comprenant en outre une conduite centrale reliant l'ensemble des conduits de récupération et reliée au bac de récupération intermédiaire.

Selon un mode de réalisation, les parois latérales du fond comprennent au moins un orifice transversal d'évacuation débouchant dans l'enveloppe et dans le bac de récupération intermédiaire et dans lequel le fond de l'enveloppe comprend au moins une pente inclinée vers le bac de récupération intermédiaire.

Selon un mode de réalisation, le refroidisseur ou condenseur comprend au moins une goulotte de circulation s'étendant entre une extrémité inférieure de l'échangeur thermique et le bac de récupération intermédiaire.

Selon un mode de réalisation, le refroidisseur ou condenseur est un refroidisseur ou condenseur adiabatique comprenant un dispositif d'humidification de l'air comprenant au moins un média monté en amont de l'échangeur thermique, un système d'arrosage d'un fluide d'humidification configuré pour humidifier ledit média.

Le dispositif d'humidification comprend en outre un système de récupération du fluide d'humidification après avoir traversé le média formant le bac de récupération intermédiaire.

En variante, le refroidisseur ou condenseur est un refroidisseur ou condenseur adiabatique comprenant un dispositif d'humidification de l'air comprenant un système de pulvérisation d'un fluide d'humidification en amont de l'échangeur thermique.

Selon un autre aspect, l'invention concerne un procédé de confinement de fuites de fluide circulant dans un échangeur de chaleur d'un refroidisseur ou condenseur sec ou adiabatique, selon la revendication 10, comprenant une enveloppe délimitée par des parois latérales et un fond recueillant un fluide recueilli, au moins un échangeur de chaleur traversé par un flux d'air et dans lequel est destiné à circuler un fluide à refroidir ou à condenser, ledit échangeur de chaleur étant monté dans l'enveloppe, le refroidisseur ou condenseur comprenant au moins un capteur de détection d'une fuite de fluide circulant dans l'échangeur de chaleur, dans lequel :
- on détecte dans le fluide recueilli une fuite du fluide circulant dans l'échangeur thermique par le capteur de détection de fluide , et
- on fait circuler le fluide recueilli contenant la fuite vers un système de confinement lorsqu'une fuite de fluide est détectée par le capteur de détection.

Selon l'invention, lorsqu'une fuite de fluide circulant dans l'échangeur thermique et recueillie dans le fond de l'enveloppe est détectée par le capteur de détection, on ferme une première vanne reliant un bac de récupération intermédiaire à l'extérieur, le bac de récupération intermédiaire étant relié de manière fluidique au fond de l'enveloppe, et on ouvre une deuxième vanne reliant le bac de récupération intermédiaire à un bac de confinement des fuites de fluide monté sous l'enveloppe.

Ainsi, lorsqu'une fuite du fluide circulant dans l'échangeur thermique est détectée, le fluide recueilli contenant cette fuite est acheminé vers un bac de confinement.

Lorsqu'aucune fuite de fluide circulant dans les batteries n'est détectée par le capteur de détection, la deuxième vanne se ferme.

Dans le cas d'un refroidisseur/condenseur adiabatique sans recirculation du fluide d'humidification, le bac de récupération intermédiaire collecte de l'eau de pluie, le fluide d'humidification et d'éventuelles fuites de fluide à refroidir ou à condenser. Lorsqu'une fuite de fluide circulant dans l'échangeur thermique est détectée par le capteur présent dans la conduite d'évacuation du système de confinement des fuites, la première vanne se ferme et la deuxième vanne s'ouvre de sorte à faire circuler le fluide recueilli dans le bac de récupération intermédiaire vers le bac de confinement du fluide recueilli contenant les fuites.

Le fluide recueilli comprend ici un mélange d'eau de pluie, fluide d'humidification et de fluide circulant dans les batteries dans le cas d'un refroidisseur/condenseur adiabatique sans recirculation du fluide d'humidification.

Lorsqu'aucune fuite du fluide circulant dans l'échangeur thermique n'est détectée par le capteur présent dans la conduite d'évacuation du système de confinement des fuites, la première vanne s'ouvre et la deuxième vanne se ferme, de sorte à faire circuler le fluide recueilli comprenant l'eau de pluie et le fluide d'humidification vers l'extérieur.

Dans le cas d'un refroidisseur/condenseur adiabatique avec recirculation du fluide d'humidification, le bac de récupération intermédiaire collecte de l'eau de pluie, le fluide d'humidification et d'éventuelles fuites de fluide à refroidir ou à condenser. Lorsqu'une fuite de fluide circulant dans les batteries est détectée par le capteur présent dans la conduite d'évacuation du système de confinement des fuites, la première vanne se ferme et la deuxième vanne s'ouvre de sorte à faire circuler le fluide recueilli dans le bac de récupération intermédiaire vers le bac de confinement du fluide recueilli.

Le fluide recueilli comprend ici un mélange d'eau de pluie, fluide d'humidification et de fluide circulant dans les batteries dans le cas d'un refroidisseur/condenseur adiabatique avec recirculation du fluide d'humidification.

Lorsqu'aucune fuite du fluide circulant dans les batteries n'est détectée par le capteur présent dans la conduite d'évacuation du système de confinement des fuites, la première vanne reste fermée et la deuxième vanne se ferme, de sorte à faire recirculer le fluide recueilli comprenant le fluide d'humidification. La première vanne s'ouvre régulièrement afin de purger le bac de récupération intermédiaire.

La présente invention sera mieux comprise à l'étude de la description détaillée de modes de réalisation, pris à titre d'exemples nullement limitatifs et illustrés par les dessins annexés, sur lesquels :
[Fig 1] représente, très schématiquement, un refroidisseur ou condenseur sec selon l'état de la technique ;
[Fig 2A]
[Fig 2B] représentent, très schématiquement, deux exemples de réalisation d'un refroidisseur ou condenseur adiabatique à média selon l'état de la technique ;
[Fig 3] est une vue en perspective d'un refroidisseur ou condenseur sec ou adiabatique selon l'invention ;
[Fig 4] illustre une vue de côté d'une des batteries du refroidisseur ou condenseur de la figure 3 selon un mode de réalisation ;
[Fig 5] est une vue de détails de la figure 3 ;
[Fig 6] est une vue en coupe partielle en perspective du refroidisseur ou condenseur de la figure 3 ;
[Fig 7] est une vue de détails de la figure 6 ;
[Fig 8] est une vue de détails de la figure 7 ;
[Fig 9]

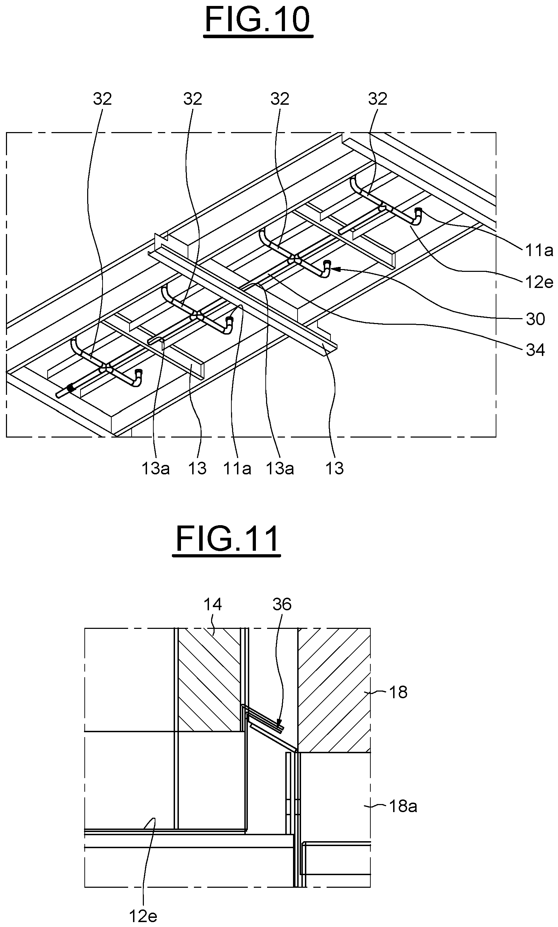

[Fig 10] représentent un refroidisseur ou condenseur sec ou adiabatique selon un mode de réalisation de l'invention ;
[Fig 11]
[Fig 12]

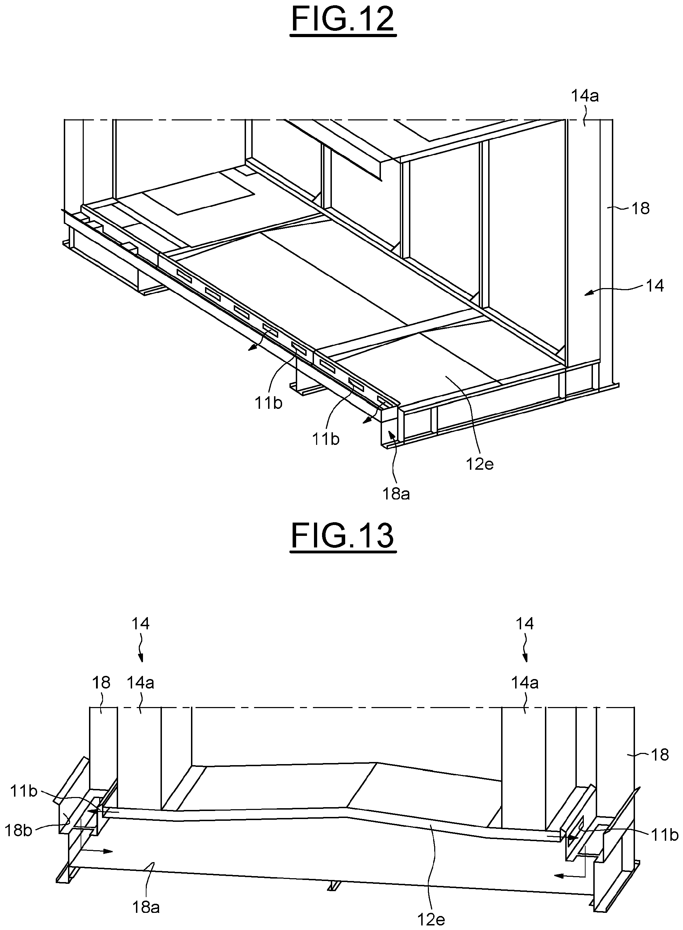

[Fig 13] représentent un refroidisseur ou condenseur adiabatique selon un autre mode de réalisation de l'invention ;

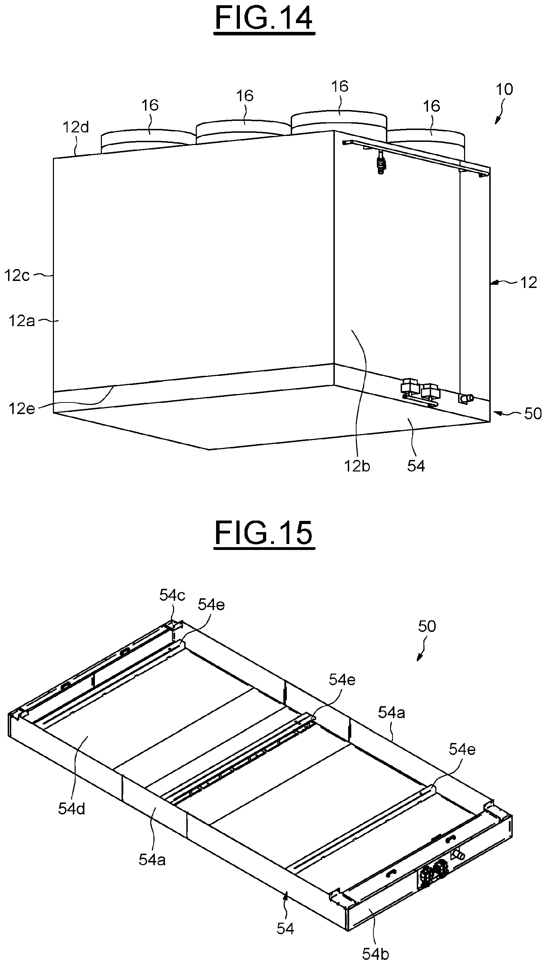

[Fig 14] illustre un refroidisseur ou condenseur sec ou adiabatique selon un autre mode de réalisation de l'invention comprenant un bac de confinement des fuites de fluide ;
[Fig 15] illustre en perspective le bac de confinement des fuites de fluide de la figure 14 ; et

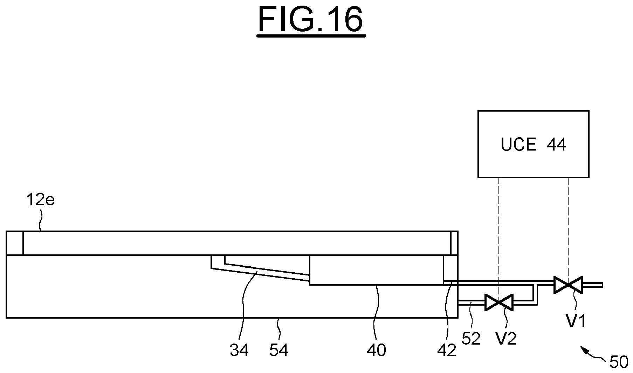

[Fig 16] représente schématiquement une vue en coupe du refroidisseur ou condenseur de la figure 14.

Dans la suite de la description, les termes « internes » et « externes » font référence à l'intérieur du refroidisseur ou condenseur sec ou adiabatique, les parties internes sont plus proches de l'intérieur du refroidisseur ou condenseur que les parties externes.

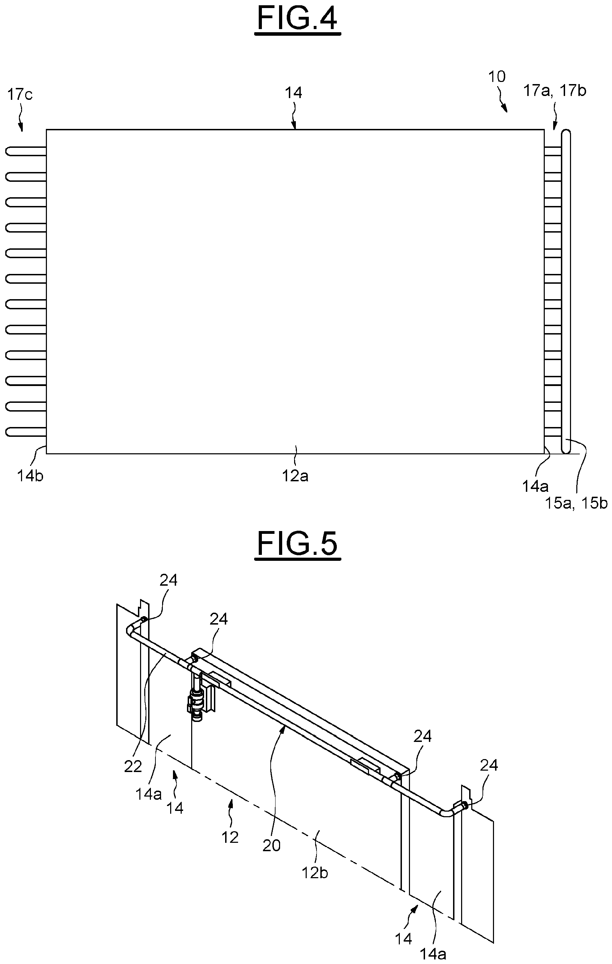

Sur les figures 3 et 5 est représenté un refroidisseur/condenseur référencé 10 dans son ensemble dans une position supposée verticale. Le refroidisseur/condenseur 10 peut être de type aérocondenseur dans lequel circule un fluide à condenser ou refroidisseur dans lequel circule un fluide à refroidir. Le refroidisseur/condenseur 10 peut être de type « sec » ou « adiabatique » avec ou sans média.

Le refroidisseur/condenseur 10 comprend une enveloppe ou enceinte 12 non étanche notamment à l'air comprenant quatre parois latérales ici verticales, à savoir deux parois de côtés 12a, une paroi avant 12b transversale et une paroi arrière 12c transversale. L'enveloppe 12 comprend en outre une paroi supérieure 12d et un plancher ou paroi inférieure formant un fond 12e. L'ensemble des parois 12a, 12b, 12c, 12d, 12e délimitent une enceinte interne. L'enceinte est, de préférence, étanche aux particules de biomasse extérieures.

Le refroidisseur/condenseur 10 comprend en outre deux batteries d'échange thermique 14 ou échangeur de chaleur traversées chacune par un flux d'air (non représenté) distinct. En d'autres termes, un flux d'air ne traverse d'une seule batterie d'échange thermique.

En variante, le refroidisseur/condenseur 10 pourrait comprendre qu'une seule batterie traversée par un flux d'air.

Les batteries d'échange thermique 14 sont disposées, de manière nullement limitative, en parallèle dans l'enceinte interne de l'enveloppe 12 et comprenant chacune une pluralité de tubes 17a, 17b, 17c, visibles sur la figure 4, et d'ailettes (non représentés) ou de micro canaux. Un fluide, par exemple, un fluide à refroidir ou à condenser, tel que par exemple un fluide frigorigène, de l'eau, du glycol, un mélange d'eau et de glycol ou tout autre fluide adapté pour être condensé ou refroidi, circule dans les tubes de chacune des batteries d'échange thermique 14. Dans le cas d'un aérocondenseur, les batteries d'échange thermique 14 sont configurées pour faire passer le fluide frigorigène à condenser d'une forme gazeuse à une forme liquide. Le fluide gazeux en entrée F_{G} est condensé pour délivrer un fluide liquide en sortie F_{S}.

En variante, dans le cas d'un refroidisseur, les batteries d'échange thermique 14 sont configurées pour refroidir le fluide circulant dans lesdites batteries. Le fluide en sortie Fs est refroidi par rapport au fluide en entrée F_{E}.

Tel qu'illustré sur la figure 4 et de manière nullement limitative, chaque batterie d'échange thermique 14 comprend une face avant 14a et une face arrière 14b, opposée à la face avant, et deux côtés latéraux (non référencés), un côté latéral externe, du côté extérieur, et un côté latéral interne, opposé au côté latéral externe.

Chaque batterie 14 comprend un collecteur 15a d'entrée du fluide frigorigène et à un collecteur 15b de sortie du fluide frigorigène.

Tel qu'illustré, le collecteur 15a d'entrée du fluide frigorigène est relié à des premiers tubes 17a de la batterie du côté de la face avant 14a de la batterie et le collecteur 15b de sortie du fluide frigorigène est relié à des deuxièmes tubes 17b de la batterie du côté de la face avant 14a de la batterie. En variante, on pourrait prévoir que le collecteur 15b de sortie soit relié à des tubes de la batterie du côté de la face arrière 14b de la batterie.

Le refroidisseur/condenseur 10 comprend un ou plusieurs ventilateurs 16 montés sur la paroi supérieure 12d de l'enveloppe 12 et configurés pour mettre en mouvement le flux d'air en aspirant de l'air extérieur et en le faisant passer à travers la batterie d'échange thermique 14 correspondante à travers les parois latérales.

Dans l'exemple illustré, les parois latérales 12a du refroidisseur/condenseur sont distinctes des batteries 14. En variante, on pourrait prévoir que le côté latéral externe d'au moins une des batteries, voir des deux batteries forment les parois latérales 12a de l'enveloppe 12.

Dans le cas où le côté latéral externe des batteries forme les parois latérales 12a du refroidisseur/condenseur 10, l'air extérieur aspiré par les ventilateurs 16 circule directement à travers les batteries d'échange thermique 14 à travers lesdits côtés latéraux externes.

On pourrait prévoir de disposer les batteries 14 de manière verticale ou de manière oblique pour former un V, voire de manière horizontale.

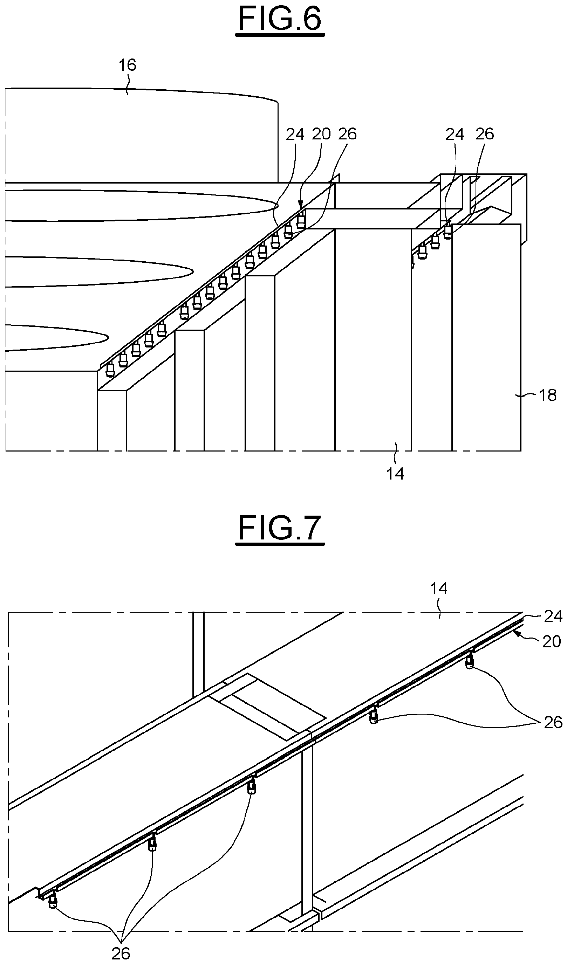

Tel qu'illustré sur la figure 6, le refroidisseur/condenseur 10 est ici un refroidisseur/condenseur adiabatique comprenant un dispositif d'humidification de l'air comprenant deux médias ou organes d'absorption 18 configurés pour humidifier le flux d'air entrant dans les batteries 14, chacun des médias 18 est associé à une batterie 14. Chaque média 18 est disposé en amont d'une batterie 14 dans le sens de circulation du flux d'air mis en mouvement par les ventilateurs 16. Le média est généralement réalisé en matériau absorbant.

Tel qu'illustré, le dispositif d'humidification de l'air comprend en outre un système (non représenté) d'arrosage par un fluide d'humidification, par exemple de l'eau, disposé au-dessus de chacun des médias 18 et configuré pour humidifier ledit média 18 correspondant et un système 18a de récupération ou de collecte du fluide d'humidification après avoir traversé le média 18. Le système 18a de récupération du fluide d'humidification est visible sur la figure 11.

En variante, on pourrait prévoir qu'une seule batterie d'échange thermique et un média d'humidification associé. On pourrait également prévoir un nombre de batteries d'échange thermique supérieur à trois.

Dans le cas où les côtés latéraux des batteries 14 forment les parois latérales 12a de l'enveloppe 12, le dispositif d'humidification de l'air est disposé à l'extérieur de l'enveloppe 12.

En variante, on pourrait prévoir que refroidisseur/condenseur 10 soit « sec », c'est-à-dire dépourvu de système d'humidification et ainsi de médias.

Tel qu'illustré, et de manière nullement limitative, le refroidisseur/condenseur 10 comprend un système 20 de neutralisation de fuites potentielles de fluide circulant dans les batteries d'échange thermique 14.

Le système 20 de neutralisation de fuites potentielles de fluide circulant dans les batteries 14 comprend une conduite 22 d'amenée d'un fluide sous haute pression, notamment de l'eau, située à l'extérieur de l'enveloppe 12 et une pluralité de conduites 24 d'alimentation chacune connectées à la conduite d'amenée de fluide de neutralisation et s'étendant le long de chaque côté latéral des batteries 14. Tel qu'illustré, et de manière non limitative, les conduites 24 d'alimentation s'étendent à l'intérieur de l'enveloppe 12.

La conduite 22 d'amenée de fluide de neutralisation et les conduites d'alimentation 24 forment un circuit de distribution fermé de fluide de neutralisation.

Chaque conduite 24 d'alimentation est fixée sur un côté latéral d'une batterie 14. Ainsi, les deux côtés latéraux de chacune des batteries 14 sont entourés par une conduite 24 d'alimentation.

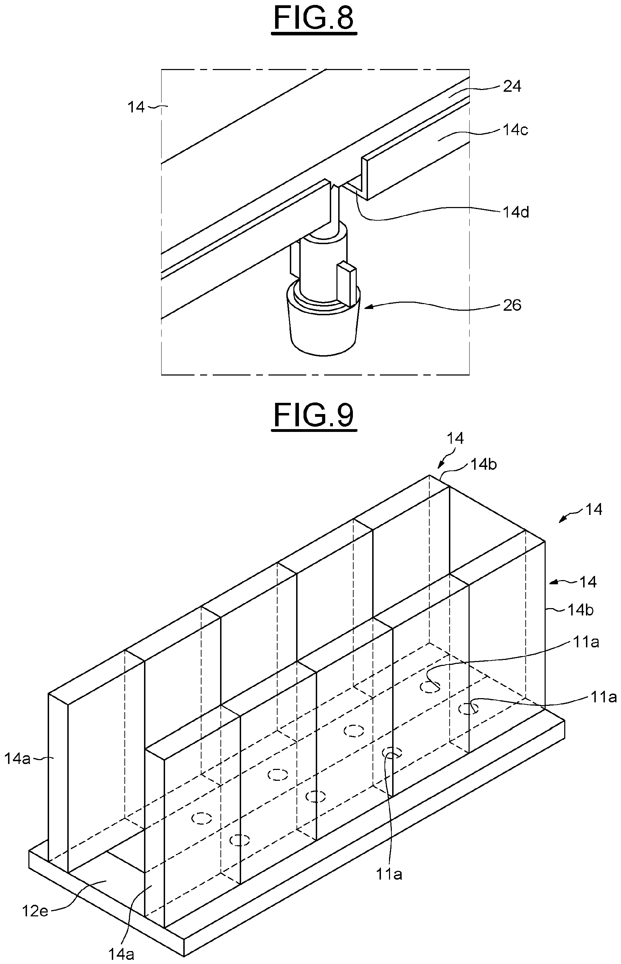

Tel qu'illustré en détails sur les figures 7 et 8, chaque conduite 24 d'alimentation est montée sur une patte de fixation 14c s'étendant le long de chaque côté latéral des batteries 14.

Chaque conduite 24 d'alimentation comprend une pluralité de buses ou disperseurs 26 s'étendant selon une direction sensiblement perpendiculaire à la conduite 24 d'alimentation. Chaque buse 26 s'étendant dans une encoche 14d correspondante prévue dans les pattes de fixation 14c des batteries 14.

En variante, on pourrait prévoir de fixer les conduites 24 d'alimentation en eau de chaque côté latéral des batteries 14 d'une autre manière.

Dans le cas où les parois latérales des batteries forment les parois latérales de l'enveloppe 12, deux conduites 24 d'alimentation du fluide de neutralisation sont disposées à l'extérieur de l'enveloppe 12.

On pourrait également prévoir un nombre de conduite d'alimentation par côté latéral de chaque batterie 14 supérieur à un, par exemple, supérieur ou égal à deux.

Le refroidisseur/condenseur 10 comprend un organe de détection ou capteur de détection (non représenté), monté par exemple dans l'enveloppe 12 et configuré pour détecter une fuite du fluide circulant dans les batteries 14.

Lorsqu'une fuite du fluide circulant dans les batteries 14 est détectée, le système 20 de neutralisation de fuites est activé automatiquement, de sorte à pulvériser ou brumiser le fluide de neutralisation, par exemple de l'eau ou un fluide neutre sous haute pression de chaque côté des batteries 14 et ainsi permettre de rabattre le fluide s'échappant des batteries vers le fond 12e de l'enveloppe 12.

En effet, en cas de choc sur les batteries d'échange thermique, ou de perçage des tubes formant lesdites batteries, il y a un risque de fuite du fluide qui ne doit en aucun cas s'échapper dans l'environnement.

Le système 20 de neutralisation permet un abattement des fuites vers le fond de l'enveloppe 12, et ainsi la maîtrise d'éventuelles fuites de fluide circulant dans les batteries.

En variante, le refroidisseur/condenseur 10 pourrait être dépourvu du système 20 de neutralisation de fuites potentielles de fluide et du capteur associé.

Dans le cas d'un refroidisseur/condenseur dit « adiabatique », le système d'humidification de l'air est activé en parallèle afin de pulvériser le fluide d'humidification sur le média 18.

Tel qu'illustré sur les figures 9 à 13, le refroidisseur/condenseur 10 comprend un système 30 de collecte ou récupération du fluide de fuite contenant le fluide échappé des batteries 14 et éventuellement le fluide de neutralisation dans le cas où le refroidisseur/condenseur 10 comprend un système 20 de neutralisation de fuites potentielles de fluide.

Dans le mode de réalisation illustré sur les figures 9 et 10, le système 30 de collecte comprend une pluralité de conduits 32 de récupération montée sous le plancher de l'enveloppe 12 et comprenant chacun une extrémité libre s'étendant dans un orifice 11a débouchant pratiqué dans le fond 12e de l'enveloppe 12. Une conduite centrale 34 relie l'ensemble des conduits 32 de récupération et s'entend vers l'extérieur de l'enveloppe 12.

Le fluide recueilli dans le fond 12e de l'enveloppe 12 s'écoule ainsi à travers les orifices 11a dans les conduits 32 de récupération, et dans la conduite principale 34 en vue d'être récupéré et traité à l'extérieur de l'enveloppe 12. Par exemple, la conduite principale 34 peut déboucher dans le système 18a de récupération du fluide d'humidification provenant du média 18 dans le cas d'un refroidisseur/condenseur dit « adiabatique ».

Tel qu'illustré, le fond 12e est sensiblement plat.

Chaque conduit 32 de récupération est relié à un orifice 11a par un coude à 90° et une bonde (non référencée), par exemple vissée par le fond 12e du plancher.

La conduite principale 34 est insérée dans des encoches 13a prévues sur des traverses 13 du plancher de l'enveloppe 12.

Le mode de réalisation illustré sur les figures 11 à 13 diffère du mode de réalisation illustré sur les figures 9 et 10 par le fait que le fond 12e de l'enveloppe 12 est incliné en deux pentes depuis le centre dudit fond 12e vers l'extérieur, de sorte à faire s'écouler le fluide vers l'extérieur, notamment dans le système 18a de récupération de fluide d'humidification provenant du média 18. Tel qu'illustré, l'extrémité inférieure des batteries 14 est surélevée par rapport au fond 12e de l'enveloppe 12.

Les parois latérales du fond 12e comprend des orifices transversaux 11b d'évacuation débouchant dans l'enveloppe 12 et dans le système ou bac 18a de récupération de fluide d'humidification provenant du média 18, passant à travers des orifices verticaux (non référencés) prévus sur le support 18b du média 18.

En variante, on pourrait prévoir qu'une seule pente pour le fond 12e ou un nombre de pentes supérieur à trois.

Tel qu'illustré sur la figure 11, le système 30 de collecte comprend une goulotte 36 de circulation s'étendant entre l'extrémité inférieure de chacune des batteries 14 et le système 18a de récupération de fluide d'humidification provenant du média 18. La goulotte 36 est ici inclinée vers ledit système 18a de récupération, de sorte à évacuer le fluide vers le système 18a de récupération de fluide d'humidification provenant du média 18.

Ce mode de réalisation s'applique à un refroidisseur/condenseur dit « adiabatique ».

Le flux d'écoulement du fluide contenant le fluide échappé des batteries 14 est représenté par des flèches visibles sur les figures 12 et 13.

Le mode de réalisation illustré sur les figures 14 à 16 diffère du mode de réalisation illustré sur les figures 9 et 10 par le fait que le refroidisseur/condenseur 10 comprend un système 50 de confinement d'une fuite de fluide du fluide circulant dans l'échangeur thermique et recueillie dans le fond 12e de l'enveloppe 12.

Tel qu'illustré en détails sur la figure 16, le système 50 de confinement d'une fuite de fluide comprend un bac de récupération intermédiaire 40 relié de manière fluidique au fond 12e de l'enveloppe 12. Tel qu'illustré, le bac de récupération intermédiaire 40 est relié au fond 12e de l'enveloppe 12 via la conduite principale 34 du système 30 de collecte de fuite. Le système 50 de confinement d'une fuite de fluide comprend en outre une conduite d'évacuation 42 reliée à une première vanne V1 et à une deuxième vanne V2 en parallèle de la première vanne V1.

La première vanne V1 est reliée à l'extérieur du refroidisseur/condenseur 10.

La deuxième vanne V2 est reliée via une conduite 52 à un bac de confinement 54 des fuites de fluide circulant à travers les batteries 14.

Le système 50 de confinement d'une fuite de fluide comprend un organe de détection ou capteur de détection (non représenté), monté sur la conduite d'évacuation 42 et configuré pour détecter dans la conduite d'évacuation 42 une fuite du fluide circulant dans les batteries 14. En variante, le capteur de détection pourrait être monté dans le bac de récupération intermédiaire ou à un autre endroit du refroidisseur ou condenseur.

La fermeture et l'ouverture des vannes V1 et V2 sont commandées par une unité électronique de commande UCE 44. Il peut s'agir de la même unité électronique de commande UCE 44 utilisée pour commander les batteries d'échange thermique et le système de pulvérisation.

Tel qu'illustré en détails sur la figure 15, le bac de confinement 54 comprend quatre parois latérales ici verticales, à savoir deux parois de côtés 54a, une paroi avant 54b transversale et une paroi arrière 54c transversale. Le bac de confinement 54 comprend en outre un plancher ou paroi inférieure formant un fond 54d.

Le bac de confinement 54 comprend, de manière nullement limitative, des nervures de rigidification 54e transversales formant des renforts du bac de confinement 54. Les nervures de rigidification 54e sont ici au nombre de trois. On pourrait prévoir un nombre différent de nervures de rigidification, par exemple, une, deux, ou plus de trois, voire aucune nervure.

Les parois 54a, 54b, 54c, 54d du bac de confinement 54 délimitent une enceinte ouverte sur le dessus. On pourrait également prévoir une paroi supérieure fermant le bac du confinement 54.

Le bac de confinement 54 est monté sous le fond 12e de l'enveloppe 12 de manière à épouser le contour de ladite enveloppe 12.

Ainsi, lorsque le bac de confinement 54 est dépourvu de paroi supérieure, aucune particule extérieure à l'enceinte ouverte peut entrer dans le bac de confinement 54.

On pourrait prévoir que l'enveloppe 12 soit posée sur le bac de confinement 54 et fixée à celui-ci ou que le bac de confinement 54 soit inséré dans des rainures de guidage correspondantes (non représentées) pratiquées dans les parois latérales de l'enveloppe par coulissement. L'insertion du bac de confinement 54 par coulissement sous l'enveloppe 12 permet de récupérer aisément le bac de confinement 54 en vue du confinement d'éventuelles fuites du fluide circulant dans les batteries.

Le système 50 de confinement d'une fuite de fluide peut également être appliqué au refroidisseur/condenseur 10 illustré en référence aux figures 12 et 13.

Dans ce mode de réalisation, le fond 12e de l'enveloppe 12 est incliné en deux pentes depuis le centre dudit fond 12e vers l'extérieur, de sorte à faire s'écouler le fluide recueilli dans le système 18a de récupération de fluide d'humidification provenant du média 18.

Les parois latérales du fond 12e comprend des orifices transversaux 11b d'évacuation débouchant dans l'enveloppe 12 et dans le système ou bac 18a de récupération de fluide d'humidification provenant du média 18, passant à travers des orifices verticaux (non référencés) prévus sur le support 18b du média 18. Le bac 18a de récupération de fluide d'humidification joue le rôle du bac de récupération intermédiaire du système 50 de confinement d'une fuite de fluide.

Tel qu'illustré sur la figure 11, le système 30 de collecte comprend une goulotte 36 de circulation s'étendant entre l'extrémité inférieure de chacune des batteries 14 et le système 18a de récupération de fluide d'humidification provenant du média 18. La goulotte 36 est ici inclinée vers ledit système 18a de récupération, de sorte à évacuer le fluide recueilli vers le système 18a de récupération de fluide d'humidification provenant du média 18.

Cette application est possible dans le cas d'un refroidisseur/condenseur adiabatique.

De manière générale, le système 50 de confinement d'une fuite de fluide est appliqué à refroidisseur/condenseur comprenant un bac de récupération intermédiaire relié de manière fluidique, par exemple via des conduites reliées à des orifices 11a débouchant pratiqués dans le fond 12e de l'enveloppe 12, dans l'exemple illustré sur les figures 9 et 10, via des orifices transversaux 11b pratiqués sur les parois latérales du fond 12e de l'enveloppe, dans l'exemple illustré sur les figures 12 et 13 ou encore via une goulotte 36 inclinée, dans l'exemple illustré sur la figure 11.

Dans le cas d'un refroidisseur/condenseur sec, le bac de récupération intermédiaire 40, 18a collecte de l'eau de pluie et d'éventuelles fuites de fluide à refroidir ou à condenser. Lorsqu'une fuite de fluide circulant dans les batteries 14 est détectée par le capteur présent dans la conduite d'évacuation 42 du système 50 de confinement des fuites, la première vanne V1 se ferme et la deuxième vanne V2 s'ouvre de sorte à faire circuler le fluide recueilli dans le bac de récupération intermédiaire 40, 18a vers le bac de confinement 54 des fuites de fluide.

Le fluide recueilli comprend ici un mélange d'eau de pluie et de fluide circulant dans les batteries dans le cas d'un refroidisseur/condenseur sec.

Lorsqu'aucune fuite du fluide circulant dans les batteries 14 n'est détectée par le capteur présent dans la conduite d'évacuation 42 du système 50 de confinement des fuites, la première vanne V1 s'ouvre et la deuxième vanne V2 se ferme, de sorte à faire circuler le fluide recueilli dans le bac de récupération intermédiaire 40, 18a vers l'extérieur. Le fluide recueilli comprend ici de l'eau de pluie dans le cas d'un refroidisseur/condenseur sec.

Dans le cas d'un refroidisseur/condenseur adiabatique sans recirculation du fluide d'humidification, le bac de récupération intermédiaire 40, 18a collecte de l'eau de pluie, le fluide d'humidification et d'éventuelles fuite de fluide à refroidir ou à condenser. Lorsqu'une fuite de fluide circulant dans les batteries 14 est détectée par le capteur présent dans la conduite d'évacuation 42 du système 50 de confinement des fuites, la première vanne V1 se ferme et la deuxième vanne V2 s'ouvre de sorte à faire circuler le fluide recueilli dans le bac de récupération intermédiaire 40, 18a vers le bac de confinement 54 des fuites de fluide.

Le fluide recueilli comprend ici un mélange d'eau de pluie, fluide d'humidification et de fluide circulant dans les batteries dans le cas d'un refroidisseur/condenseur adiabatique sans recirculation du fluide d'humidification.

Lorsqu'aucune fuite du fluide circulant dans les batteries 14 n'est détectée par le capteur présent dans la conduite d'évacuation 42 du système 50 de confinement des fuites, la première vanne V1 s'ouvre et la deuxième vanne V2 se ferme, de sorte à faire circuler le fluide comprenant l'eau de pluie et le fluide d'humidification recueilli dans le bac de récupération intermédiaire 40, 18a vers l'extérieur.

Dans le cas d'un refroidisseur/condenseur adiabatique avec recirculation du fluide d'humidification, le bac de récupération intermédiaire 40, 18a collecte de l'eau de pluie, le fluide d'humidification et d'éventuelles fuite de fluide à refroidir ou à condenser. Lorsqu'une fuite de fluide circulant dans les batteries 14 est détectée par le capteur présent dans la conduite d'évacuation 42 du système 50 de confinement des fuites, la première vanne V1 se ferme et la deuxième vanne V2 s'ouvre de sorte à faire circuler le fluide recueilli dans le bac de récupération intermédiaire 40, 18a vers le bac de confinement 54 des fuites de fluide.

Le fluide recueilli comprend ici un mélange d'eau de pluie, fluide d'humidification et de fluide circulant dans les batteries dans le cas d'un refroidisseur/condenseur adiabatique avec recirculation du fluide d'humidification.

Lorsqu'aucune fuite du fluide circulant dans les batteries 14 n'est détectée par le capteur présent dans la conduite d'évacuation 42 du système 50 de confinement des fuites, la première vanne V1 reste fermée et la deuxième vanne V2 se ferme, de sorte à faire recirculer le fluide comprenant le fluide d'humidification recueilli dans le bac de récupération intermédiaire 40, 18a dans le système d'humidification. La première vanne V1 est régulièrement ouverte afin de purger le bac de récupération intermédiaire 40, 18a.

Grâce à l'invention, il est possible de récupérer de manière étanche les éventuelles fuites de fluide circulant dans les tubes des batteries d'échange thermique présents à l'intérieur de l'enveloppe 12 d'un refroidisseur/condenseur sec ou adiabatique en acheminant automatiquement le fluide recueilli dans un bac de confinement dès qu'une fuite est détectée et en récupérant les fuites de fluide non souillées par les particules de biomasse.

## Revendications

1. Refroidisseur ou condenseur (10) sec ou adiabatique comprenant une enveloppe (12) délimitée par des parois latérales (12a, 12b, 12c) et un fond (12e) destiné à recueillir un fluide recueilli, et au moins un échangeur de chaleur (14) traversé par un flux d'air et dans lequel est destiné à circuler un fluide à refroidir ou à condenser, ledit échangeur de chaleur (14) étant monté dans l'enveloppe (12), le refroidisseur ou condenseur comprenant au moins un capteur de détection d'une fuite de fluide circulant dans l'échangeur de chaleur (14), ledit refroidisseur ou condenseur (10) comprenant un système (50) de confinement d'une fuite de fluide configuré pour collecter le fluide recueilli dans le fond (12e) de l'enveloppe (12) lorsqu'une fuite de fluide est détectée par le capteur de détection **caractérisé en ce que** le système (50) de confinement d'une fuite de fluide comprend :
- un bac de récupération intermédiaire (40, 18a) relié d'une part de manière fluidique au fond (12e) de l'enveloppe (12) et relié d'autre part à une première vanne (V1) et à une deuxième vanne (V2) montée en parallèle de la première vanne (V1), la première vanne (V1) étant reliée à l'extérieur du refroidisseur ou condenseur (10) et
- un bac de confinement (54) des fuites de fluide monté sous le fond (12e) de l'enveloppe (12), la deuxième vanne (V2) étant reliée au bac de confinement (54).

2. Refroidisseur ou condenseur (10) selon la revendication 1, comprenant une unité électronique de commande (44) configurée pour commander l'ouverture de la deuxième vanne (V2) lorsqu'une fuite de fluide est détectée par le capteur de détection

3. Refroidisseur ou condenseur (10) selon la revendication 2, dans lequel l'unité électronique de commande (44) est configurée pour commander l'ouverture de la première vanne (V1) lorsqu'aucune fuite de fluide est détectée par le capteur de détection.

4. Refroidisseur ou condenseur (10) selon l'une quelconque des revendications 1 à 3, dans lequel, le bac de confinement (54) comprend quatre parois latérales (54a, 54b, 54c) et un plancher formant un fond (54d).

5. Refroidisseur ou condenseur (10) selon l'une quelconque des revendications 1 à 4, dans lequel le bac de confinement (54) est inséré sous l'enveloppe (12) par translation dans des rainures de guidage pratiquées dans l'enveloppe (12).

6. Refroidisseur ou condenseur (10) selon l'une quelconque des revendications 1 à 5, comprenant un système (30) de collecte du fluide recueilli dans le fond de l'enveloppe (12) comportant une pluralité de conduits (32) de récupération montés sous le plancher de l'enveloppe (12) et comprenant chacun une extrémité libre s'étendant dans un orifice (11a) débouchant pratiqué dans le fond (12e) de l'enveloppe (12), le système (30) de collecte comprenant en outre une conduite centrale (34) reliant l'ensemble des conduits (32) de récupération et reliée au bac de récupération intermédiaire (40) .

7. Refroidisseur ou condenseur (10) selon l'une quelconque des revendications 1 à 5, dans lequel les parois latérales du fond (12e) comprennent au moins un orifice transversal (11b) d'évacuation débouchant dans l'enveloppe (12) et dans le bac de récupération intermédiaire (18a) et dans lequel le fond (12e) de l'enveloppe (12) comprend au moins une pente inclinée vers le bac de récupération intermédiaire (18a).

8. Refroidisseur ou condenseur (10) selon l'une quelconque des revendications 1 à 5, comprenant au moins une goulotte (36) de circulation s'étendant entre une extrémité inférieure de l'échangeur thermique (14) et le bac de récupération intermédiaire (18a).

9. Refroidisseur ou condenseur (10) selon l'une quelconque des revendications précédentes, dans lequel le refroidisseur ou condenseur (10) est un refroidisseur ou condenseur (10) adiabatique comprenant un dispositif d'humidification de l'air comprenant au moins un média (18) monté en amont de l'échangeur thermique (14), un système d'arrosage d'un fluide d'humidification configuré pour humidifier ledit média (18).

10. Procédé de confinement de fuites de fluide circulant dans un échangeur de chaleur (14) d'un refroidisseur ou condenseur (10) sec ou adiabatique comprenant une enveloppe (12) délimitée par des parois latérales (12a, 12b, 12c) et un fond (12e) destiné à recueillir un fluide recueilli, au moins un échangeur de chaleur (14) traversé par un flux d'air et dans lequel est destiné à circuler un fluide à refroidir ou à condenser, ledit échangeur de chaleur (14) étant monté dans l'enveloppe (12), le refroidisseur ou condenseur comprenant au moins un capteur de détection d'une fuite de fluide circulant dans l'échangeur de chaleur (14), dans lequel :
- on détecte une fuite du fluide circulant dans l'échangeur de chaleur (14) par le capteur de détection de fluide, et
- on fait circuler le fluide recueilli dans le fond (12e) de l'enveloppe (12) contenant la fuite du fluide vers un système (50) de confinement lorsqu'une fuite de fluide est détectée par le capteur de détection,
le procédé est **caractérisé par** les étapes:
lorsqu'une fuite de fluide est détectée par le capteur de détection, on ferme une première vanne (V1) reliant un de récupération intermédiaire (40, 18a) à l'extérieur, le bac de récupération intermédiaire (40, 18a) étant relié de manière fluidique au fond (12e) de l'enveloppe (12), et on ouvre une deuxième vanne (V2) reliant le récupération intermédiaire (40, 18a) à un bac de confinement (54) des fuites de fluide monté sous l'enveloppe (12).

## Patentansprüche

1. Trockener oder adiabatischer Kühler oder Kondensator (10), umfassend eine Hülle (12), die durch Seitenwände (12a, 12b, 12c) und einen Boden (12e) begrenzt ist, der dazu bestimmt ist, ein aufgefangenes Fluid aufzufangen, und mindestens einen Wärmetauscher (14), der von einem Luftstrom durchquert wird, und in dem ein zu kühlendes oder zu kondensierendes Fluid dazu bestimmt ist, zu zirkulieren, wobei der Wärmetauscher (14) in der Hülle (12) montiert ist, wobei der Kühler oder Kondensator mindestens einen Sensor zum Erkennen eines Lecks eines Fluids umfasst, das in dem Wärmetauscher (14) zirkuliert, wobei der Kühler oder Kondensator (10) ein System (50) zum Einschließen eines Fluidlecks umfasst, das konfiguriert ist, um das am Boden (12e) der Hülle (12) aufgefangene Fluid zu sammeln, wenn von dem Sensor zum Erkennen ein Fluidleck erkannt wird, **dadurch gekennzeichnet, dass** das System (50) zum Einschließen eines Fluidlecks umfasst:
- einen Zwischenauffangbehälter (40, 18a), der einerseits fluidisch an den Boden (12e) der Hülle (12) angeschlossen ist, und andererseits an ein erstes Ventil (V1) und an ein zweites Ventil (V2) angeschlossen ist, das parallel zum ersten Ventil (V1) montiert ist, wobei das erste Ventil (V1) außen am Kühler oder Kondensator (10) angeschlossen ist, und
- einen Einschlussbehälter (54) für die Fluidlecks, der unter dem Boden (12e) der Hülle (12) montiert ist, wobei das zweite Ventil (V2) an den Einschlussbehälter (54) angeschlossen ist.

2. Kühler oder Kondensator (10) nach Anspruch 1, umfassend eine elektronische Steuereinheit (44), die konfiguriert ist, um die Öffnung des zweiten Ventils (V2) zu steuern, wenn von dem Sensor zum Erkennen ein Fluidleck erkannt wird.

3. Kühler oder Kondensator (10) nach Anspruch 2, wobei die elektronische Steuereinheit (44) konfiguriert ist, um die Öffnung des ersten Ventils (V1) zu steuern, wenn von dem Sensor zum Erkennen kein Fluidleck erkannt wird.

4. Kühler oder Kondensator (10) nach einem der Ansprüche 1 bis 3, wobei der Einschlussbehälter (54) vier Seitenwände (54a, 54b, 54c) und eine Bodenplatte umfasst, die den Boden (54d) bildet.

5. Kühler oder Kondensator (10) nach einem der Ansprüche 1 bis 4, wobei der Einschlussbehälter (54) durch Translation in den Führungsnuten, die in die Hülle (12) eingearbeitet sind, unter der Hülle (12) eingeführt wird.

6. Kühler oder Kondensator (10) nach einem der Ansprüche 1 bis 5, umfassend ein System (30) zum Sammeln des am Boden der Hülle (12) aufgefangenen Fluids, welches eine Vielzahl von Wiedergewinnungsleitungen (32) beinhaltet, die unter der Bodenplatte der Hülle (12) montiert sind, und jeweils ein freies Ende umfassen, das sich in einer Einmündungsöffnung (11a) erstreckt, die in den Boden (12e) der Hülle (12) eingearbeitet ist, wobei das System (30) zum Sammeln weiter eine zentrale Leitung (34) umfasst, die die Gesamtheit der Wiedergewinnungsleitungen (32) verbindet, und an den Zwischenauffangbehälter (40) angeschlossen ist.

7. Kühler oder Kondensator (10) nach einem der Ansprüche 1 bis 5, wobei die Seitenwände des Bodens (12e) mindestens eine querlaufende Abführöffnung (11b) umfassen, die in die Hülle (12) und in den Zwischenauffangbehälter (18a) mündet, und wobei der Boden (12e) der Hülle (12) mindestens eine abfallende Schräge zum Zwischenauffangbehälter (18a) umfasst.

8. Kühler oder Kondensator (10) nach einem der Ansprüche 1 bis 5, umfassend mindestens eine Rinne (36) zum Zirkulieren, die sich zwischen einem unteren Ende des Wärmetauschers (14) und dem Zwischenauffangbehälter (18a) erstreckt.

9. Kühler oder Kondensator (10) nach einem der vorstehenden Ansprüche, wobei der Kühler oder Kondensator (10) ein adiabatischer Kühler oder Kondensator (10) ist, der eine Vorrichtung zum Befeuchten der Luft umfasst, die mindestens ein Medium (18) umfasst, das stromaufwärts des Wärmetauschers (14) gelegen montiert ist, wobei ein System zum Sprühen eines Befeuchtungsfluids konfiguriert ist, um das Medium (18) zu befeuchten.

10. Verfahren zum Einschließen von Lecks eines Fluids, das in einem Wärmetauscher (14) eines trockenen oder adiabatischen Kühlers oder Kondensators (10) zirkuliert, umfassend eine Hülle (12), die durch Seitenwände (12a, 12b, 12c) und einen Boden (12e) begrenzt ist, der dazu bestimmt ist, ein aufgefangenes Fluid aufzufangen, mindestens einen Wärmetauscher (14), der von einem Luftstrom durchquert wird, und in dem ein zu kühlendes oder zu kondensierendes Fluid dazu bestimmt ist, zu zirkulieren, wobei der Wärmetauscher (14) in der Hülle (12) montiert ist, wobei der Kühler oder Kondensator mindestens einen Sensor zum Erkennen eines Lecks eines Fluids umfasst, das in dem Wärmetauscher (14) zirkuliert, wobei:
- ein Leck des Fluids, das in dem Wärmetauscher (14) zirkuliert, durch den Sensor zum Erkennen eines Fluids erkannt wird, und
- das am Boden (12e) der Hülle (12), der das Leck des Fluids enthält, aufgefangene Fluid, zu einem System (50) zum Einschließen zirkulieren lassen wird, wenn von dem Sensor zum Erkennen ein Fluidleck erkannt wird,
wobei das Verfahren durch die folgenden Schritte gekennzeichnet ist:
wenn von dem Sensor zum Erkennen ein Fluidleck erkannt wird, das erste Ventil (V1), das einen Zwischenauffangbehälter (40, 18a) außen anschließt, wobei der Zwischenauffangbehälter (40, 18a) fluidisch an den Boden (12e) der Hülle (12) angeschlossen ist, geschlossen wird, und ein zweites Ventil (V2), das den Zwischenauffangbehälter (40, 18a) an einen Einschlussbehälter (54) von Fluidlecks, der unter der Hülle (12) montiert ist, geöffnet wird.

## Claims

1. A dry or adiabatic cooler or condenser (10) comprising an enclosure (12) delimited by lateral walls (12a, 12b, 12c) and a bottom (12e) intended to collect a collected fluid, and at least one heat exchanger (14) crossed by an air flow and in which a fluid to be cooled or condensed is intended to circulate, said heat exchanger (14) being mounted in the enclosure (12), the cooler or condenser comprising at least one sensor for detecting a fluid leak circulating in the heat exchanger (14), said cooler or condenser (10) comprising a system (50) for containing a fluid leak configured to collect the fluid collected in the bottom (12e) of the enclosure (12) when a fluid leak is detected by the detection sensor, **characterised in that** the system (50) for containing a fluid leak comprises:
- an intermediate recovery tank (40, 18a) fluidly connected on the one hand to the bottom (12e) of the enclosure (12) and connected on the other hand to a first valve (V1) and to a second valve (V2) mounted in parallel with the first valve (V1), the first valve (V1) being connected to the outside of the cooler or condenser (10) and
- a tank (54) for containing the fluid leaks mounted beneath the bottom (12e) of the enclosure (12), the second valve (V2) being connected to the containment tank (54).

2. The cooler or condenser (10) according to claim 1, comprising an electronic control unit (44) configured to control opening of the second valve (V2) when a fluid leak is detected by the detection sensor.

3. The cooler or condenser (10) according to claim 2, wherein the electronic control unit (44) is configured to control opening of the first valve (V1) when no fluid leak is detected by the detection sensor.

4. The cooler or condenser (10) according to any one of claims 1 to 3, wherein the containment tank (54) comprises four lateral walls (54a, 54b, 54c) and a floor forming a bottom (54d).

5. The cooler or condenser (10) according to any one of claims 1 to 4, wherein the containment tank (54) is inserted beneath the enclosure (12) by translation in guide grooves formed in the enclosure (12).

6. The cooler or condenser (10) according to any one of claims 1 to 5, comprising a system (30) for collecting the fluid collected in the bottom of the enclosure (12) including a plurality of recovery conduits (32) mounted beneath the floor of the enclosure (12) and each comprising a free end extending into an open-through orifice (11a) opening into the bottom (12e) of the enclosure (12), the collection system (30) further comprising a central conduit (34) connecting all of the recovery conduits (32) and connected to the intermediate recovery tank (40).

7. The cooler or condenser (10) according to any one of claims 1 to 5, wherein the lateral walls of the bottom (12e) comprise at least one transverse discharge orifice (11b) opening into the enclosure (12) and into the intermediate recovery tank (18a) and wherein the bottom (12e) of the enclosure (12) comprises at least one inclined slope towards the intermediate recovery tank (18a).

8. The cooler or condenser (10) according to any one of claims 1 to 5, comprising at least one circulation chute (36) extending between a lower end of the heat exchanger (14) and the intermediate recovery tank (18a).

9. The cooler or condenser (10) according to any one of the preceding claims, wherein the cooler or condenser (10) is an adiabatic cooler or condenser (10) comprising an air humidification device comprising at least one media (18) mounted upstream of the heat exchanger (14), a system for sprinkling a humidifying fluid configured to humidify said media (18).

10. A method for containing fluid leaks circulating in a heat exchanger (14) of a dry or adiabatic cooler or condenser (10) comprising an enclosure (12) delimited by lateral walls (12a, 12b, 12c) and a bottom (12e) intended to collect a collected fluid, at least one heat exchanger (14) crossed by an air flow and in which a fluid to be cooled or condensed is intended to circulate, said heat exchanger (14) being mounted in the enclosure (12), the cooler or condenser comprising at least one sensor for detecting a leak of fluid circulating in the heat exchanger (14), wherein:
- a leak of the fluid circulating in the heat exchanger (14) is detected by the fluid detection sensor, and
- the fluid collected in the bottom (12e) of the enclosure (12) containing the fluid leak is circulated towards a containment system (50) when a fluid leak is detected by the detection sensor,
the method is **characterised by** the steps:
when a fluid leak is detected by the detection sensor, a first valve (V1) connecting an intermediate recovery (40, 18a) to the outside is closed, the intermediate recovery tank (40, 18a) being fluidly connected to the bottom (12e) of the enclosure (12), and a second valve (V2) connecting the intermediate recovery (40, 18a) to a tank (54) for containing the fluid leaks mounted beneath the enclosure (12) is opened.
